# EUROPEAN PATENT APPLICATION

(11) **EP 4 350 852 A1**
(43) Date of publication of application: **10.04.2024**
(21) Application number: 22818606.0
(22) Date of filing: 17.10.2022
(51) Int. Cl.: H01M 50/179, H01M 50/184, H01M 50/188

(54) **TOP COVER ASSEMBLY AND BATTERY STRUCTURE**

(30) Priority: 17.08.2022 CN 202222160478 U
(71) Applicant: Eve Power Co., Ltd., Jingmen, Hubei 448000 (CN)
(72) Inventor: LI, Shangyi, Jingmen Hubei 448000 (CN); YUE, Liangliang, Jingmen Hubei 448000 (CN); WANG, Zhiming, Jingmen Hubei 448000 (CN)
(74) Representative: Murgitroyd & Company
(86) International application number: PCT/CN2022/125700
(87) International publication number: WO 2024/036736

(57) **Abstract**

The present application provides a top cap assembly and a battery structure. The battery includes a housing including a mounting hole, and the top cap assembly passes through the mounting hole of the housing. The top cap assembly includes a pole, a sealing element, and a plastic element. The pole is provided with an annular groove recessed in a radial direction. The sealing element is sleeved on the pole and positioned in the annular groove. The sealing element is sandwiched between the housing and a groove wall of the annular groove, and the sealing element is partially positioned outside the housing. The plastic element is sleeved on the sealing element and positioned outside the housing 40, and the plastic element is partially sandwiched between the housing and the groove wall of the annular groove.

## Description

### CROSS-REFERENCE TO RELATED APPLICATION

This application claims priority to Chinese Patent Application Serial No. 202222160478.3 filed to China National Intellectual Property Administration (CNIPA) on August 17, 2022, which is incorporated by reference in the present application with its entirety.

### TECHNICAL FIELD

The present application relates to the field of battery technologies, and for example to a top cap assembly and a battery structure.

### BACKGROUND

A top cap assembly is disposed at an end of a housing. In order to ensure a service performance of a battery, the top cap assembly is hermetically connected with the housing and a pole of the top cap assembly is insulated from the housing. Related technology discloses a cylindrical battery with a novel structure, in which a sealing element is sleeved on an pole, so that the sealing element is elastically deformed to fill in a gap between the pole and the housing when the pole is riveted to the housing, and at the same time, seal and insulation between the pole and the housing are realized. However, when the sealing elements of different batteries are pressed into deformation by the housing, deformation degrees of the sealing elements along a radial direction may be different, so that consistency of the batteries is poor, thereby affecting consistency and connection stability of batteries arranged in groups.

Therefore, a top cap assembly and a battery structure are urgently needed to solve the above problems.

### SUMMARY

A top cap assembly is provided in the present application, which can not only ensure a sealing connection with a housing, but also improve consistency of batteries at the same time, thus effectively ensuring product performance of the batteries.

In a first aspect, a top cap assembly is provided in an embodiment of the present application, which is applied to a battery including a housing having a mounting hole, the top cap assembly passes through the mounting hole of the housing , where the top cap assembly includes:
an pole, where the pole is provided with an annular groove recessed in a radial direction;
a sealing element, where the sealing element is sleeved on the pole and positioned in the annular groove, the sealing element is sandwiched between the housing and a groove wall of the annular groove, and the sealing element is partially positioned outside the housing; and
a plastic element, where the plastic element is sleeved on the sealing element and positioned outside the housing, and the plastic element is partially sandwiched between the housing and the groove wall of the annular groove.

In an embodiment, a hardness of the plastic element is greater than a hardness of the sealing element.

In an embodiment, the plastic element includes an inner ring and an outer ring connected to each other, where the inner ring is sandwiched between the groove wall of the annular groove and the housing and lap-jointed with the sealing element, the outer ring is positioned outside the annular groove and positioned around an outer side of the pole, and a gap is defined between the outer ring and an outer peripheral surface of the pole.

In an embodiment, in the radial direction of the pole, the gap has a size of a in the range of 0.1mm to 0.5mm, the outer ring has a width of b in the range of 0.4mm to 1mm, and a lap length of the inner ring and the sealing element is c in the range of 0.8mm to 3mm.

In an embodiment, the sealing element includes a first sealing element and a second sealing element, where the first sealing element is lap-jointed with the inner ring, at least one of the first sealing element and the second sealing element includes a bending portion, the first sealing element and the second sealing element are abutted by the bending portion, and the bending portion is sandwiched between a groove bottom of the annular groove and the housing.

In an embodiment, a limiting groove is defined on the groove wall of the annular groove, a limiting protrusion is disposed on the inner ring, the inner ring is sandwiched between the housing and the groove wall of the annular groove, and the limiting protrusion is positioned in the limiting groove.

In an embodiment, the top cap assembly further includes a metal pressing ring, where the metal pressing ring is sleeved on the pole and positioned in the annular groove, the metal pressing ring abuts against the sealing element and is positioned at a side of the sealing element away from the plastic element, and the housing presses the sealing element and the metal pressing ring against the groove wall of the annular groove.

In an embodiment, the metal pressing ring and the pole are welded.

In an embodiment, the top cap assembly further includes a positive current collector and an inner insulating sheet, where the positive current collector is disposed on a cell of the battery, the pole passes through the mounting hole and presses the positive current collector, and the inner insulating sheet is sandwiched between the positive current collector and an inner wall of the housing.

A battery structure is provided in the present application, which has high consistency and can effectively ensure product performance of the battery.

In a second aspect, a battery structure is provided in an embodiment of the present application, including a cell, a housing, a bottom cap assembly, and the top cap assembly mentioned above, where the cell is positioned in the housing, and the top cap assembly and the bottom cap assembly are disposed at both ends of the housing, respectively.

In an embodiment, the bottom cap assembly includes a bottom cap plate and a negative current collector disposed in a stacked manner, the bottom cap assembly abuts against the cell by the negative current collector, and the bottom cap assembly is connected with the housing by the bottom cap plate.

In an embodiment, a surface of the bottom cap plate facing the negative current collector is convexly provided with a first convex portion, a surface of the negative current collector facing the bottom cap plate is convexly provided with a second convex portion, the first convex portion abuts against the second convex portion, and the second convex portion is configured to adjust a distance between the negative current collector and the bottom cap plate.

Beneficial effects of the present application are that:
The top cap assembly provided by the present application includes the pole, the sealing element, and the plastic element, where the pole is provided with the annular groove recessed along its radial direction, the sealing element is sleeved on the pole and positioned in the annular groove. When the top cap assembly passes through the mounting hole of the housing of the battery, the housing presses the sealing element, so that the sealing element is sandwiched between the housing and the groove wall of the annular groove, and generates an elastic deformation to fill in the gap between the pole and the housing, thereby realizing sealing. The sealing element is positioned at both an inner side and an outer side of the housing to ensure insulation between the pole and the housing. The plastic element is sleeved on the sealing element and positioned outside the housing, a reaction force in a direction facing the pole is provided to the sealing element positioned outside the housing by the plastic element when the sealing element generates the elastic deformation, so as to prevent an extensional deformation of the sealing element towards a side away from the pole and in the radial direction of the pole, thereby improving consistency of appearance of the top cap assembly, and reducing influence of assembly processes on the appearance of the top cap assembly, and thus ensuring product performance of the battery.

The battery structure provided by the present application includes the cell, the housing, the bottom cap assembly, and the top cap assembly. The cell is positioned in the housing, the top cap assembly and the bottom cap assembly are positioned at both ends of the housing, respectively. The top cap assembly of the battery structure can effectively improve consistency of the battery to ensure product performance of the battery.

### BRIEF DESCRIPTION OF THE DRAWINGS

FIG. 1 is a cross-sectional view of a top cap assembly provided in an embodiment of the present application;
FIG. 2 is a cross-sectional view of an pole provided in an embodiment of the present application;
FIG. 3 is an explosive view of a battery structure provided in an embodiment of the present application;
FIG. 4 is a cross-sectional view of the battery structure provided in an embodiment of the present application;
FIG. 5 is an enlarged view of part A in Fig. 4.

In FIGS:
10. Top cap assembly; 101. Pole; 1011. Annular groove; 10111. Limiting groove; 1012. Fitting hole; 11. Sealing element; 102. First sealing element; 103. Second sealing element; 1031. Bending portion; 104. Plastic element; 1041. Inner ring; 10411. Limiting protrusion; 1042. Outer ring; 105. Metal pressing ring; 106. Inner insulating sheet; 107. Positive current collector; 108. Insulating paste;
20. Bottom cap assembly; 201. Bottom cap plate; 2011. First convex portion; 2012. Explosion-proof nick; 202, Negative current collector; 2021. Second convex portion; 203. Bottom sealing ring;
30. Cell;
40. Housing; 401. Mounting hole.

### DETAILED DESCRIPTION OF THE EMBODIMENT

In the description of the present application, unless otherwise specified and limited, the terms "link", "connect" or "fix" are to be construed in a broad sense, for example, as fixedly connected, detachably connected, or integrated; mechanically connected or electrically connected; directly connected to each other or indirectly connected to each other via an intermediary; or internally connected between two elements or interacted between two elements. Meanings of the preceding terms in the present application may be understood according to situations by an ordinary person in the art.

In the present application, unless otherwise specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

In the description of this embodiment, the terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present disclosure. In addition, the terms "first" and "second" are only used to distinguish in terms of description and have no special meanings.

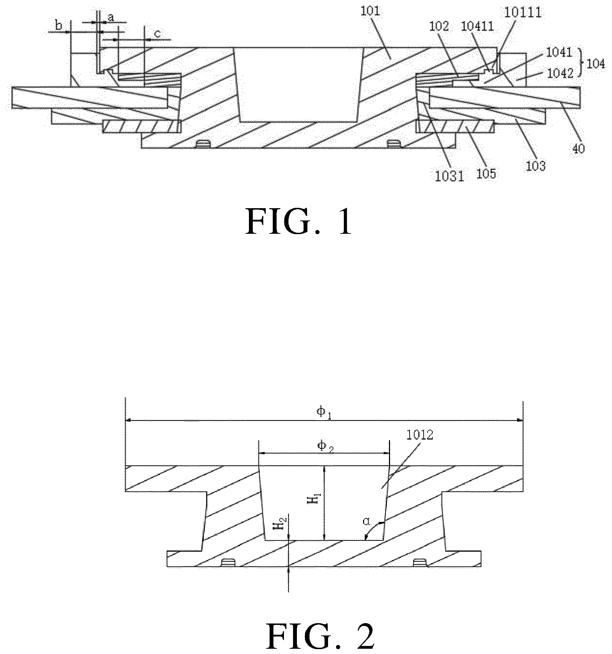

As shown in FIG. 1 to FIG. 3, a top cap assembly 10 is provided in the embodiment, including a pole 101, a sealing element 11, and a plastic element 104. The pole 101 is provided with an annular groove 1011 recessed in a radial direction, and the sealing element 11 is sleeved on the pole 101 and positioned in the annular groove 1011. As the top cap assembly 10 is connected with the housing 40 of a battery by a rivet connection between the pole 101 and the housing 40, when the pole 101 passes through a mounting hole 401 of the housing 40, the sealing element 11 is sandwiched between the housing 40 and a groove wall of the annular groove 1011, and the sealing element 11 is partially positioned outside the housing 40. That is, the housing 40 is inserted in the annular groove 1011 and presses the sealing element 11, whereby a gap between the housing 40 and the pole 101 is filled in via an elastic deformation of the sealing element 11, so as to achieve a sealing connection between the housing 40 and the pole 101 while insulating the pole 101 from the housing 40.

When the pole 101 is riveted to the housing 40, due to influence of position deviation of riveting force, etc., it is difficult to ensure that the elastic deformation of the sealing element 11 of each of the batteries is completely consistent when the battery is assembled. That is, when the sealing element 11 is elastically deformed, there may be a difference in amount of deformation of the sealing element 11 along an radial direction of the pole 101. The difference not only may affect appearance of the battery, but also may affect consistency and connection stability of batteries arranged in group, thus affecting performance of a battery module. Therefore, the plastic element 104 is sleeved on the sealing element 11 and positioned outside the housing 40, and the plastic element 104 is partially sandwiched between the housing 40 and the groove wall of the annular groove 1011. Because the plastic element 104 is made of a plastic material, the plastic element 104 doesn't undergo an elastic deformation during a process of riveting. When the sealing element 11 undergoes an elastic deformation, the plastic element 104 may provide a reactive force in a direction facing the pole 101 to the sealing element positioned outside the housing 40, thereby preventing the sealing element 11 from being extended and deformed in the radial direction of the pole 101 and towards a side away from the pole 101. By limiting a degree of deformation of the sealing element 11 in the radial direction of the pole 101, appearance of the top cap assembly 10 is kept consistent.

For example, a hardness of the plastic element 104 is greater than a hardness of the sealing element 11. For example, the sealing element 11 is made of a material of fluororubber, and the plastic element 104 is made of a plastic material of polyphenylene sulfide (PPS).

For example, the plastic element 104 includes an inner ring 1041 and an outer ring 1042 connected to each other. The outer ring 1042 is connected to an outer side of the inner ring 1041, and the inner ring 1041 is sandwiched between the groove wall of the annular groove 1011 and the housing 40 and lap-jointed with the sealing element 11. The outer ring 1042 is positioned outside the annular groove 1011 and disposed around an outer side of the pole 101, and a gap is defined between the outer ring 1042 and an outer peripheral surface the pole 101. In order to facilitate a welding between an outer end of the pole 101 and other parts of the battery module, an outer end surface of the pole 101 is not coated by the outer ring 1042, and the gap is provided to avoid a creep-age phenomenon that occurs between the pole 101 and the plastic element 104 in an wet environment, ect.. However, the inner ring 1041 is lap-jointed with the sealing element 11, so that the connection between the inner ring 1041 and the sealing element 11 has an overlapping portion, and the creep-age phenomenon that occurs between the pole 101 and the sealing element 11 positioned inside the housing 40 may also be avoided.

For example, along the radial direction of the pole 101, the gap between the outer ring 1042 and the outer peripheral surface of the pole 101 has a size of "a" in the range of 0.1mm to 0.5mm, and the outer ring 1042 has a width of "b" in the range of 0.4mm to 1mm. For example, the inner ring 1041 is lap-jointed with the sealing element 11 by a L-shaped structure, and a lap length of the inner ring 1041 and the sealing element 11 is "c" in the range of 0.8mm to 3mm.

For example, a limiting protrusion 10411 is disposed on the inner ring 1041, a limiting groove 10111 is defined on the groove wall of the annular groove 1011, and the inner ring 1041 is sandwiched between the housing 40 and the groove wall of the annular groove 1011, on which the limiting protrusion 10411 is positioned in the limiting groove 10111. By a concave-convex matching between the limiting protrusion 10411 and the limiting groove 10111, a relative position between the injection molded element 104 and the pole 101 may be fixed in the radial direction of the pole 101 to prevent the injection molded element 104 from shifting the pole 101 under a force of the elastic deformation of the sealing element 11, which is beneficial to improve appearance consistency of the top cap assembly.

For example, in order to avoid abutment between the housing 40 and a plurality of portions of the pole 101, the sealing element 11 contacts with all of groove walls of the annular groove 1011. The sealing element 11 includes a first sealing element 102 and a second sealing element 103, where the first sealing element 102 is lap-jointed with the inner ring 1041, at least one of the first sealing element 102 and the second sealing element 103 includes a bending portion 1031, the first sealing element 102 and the second sealing element 103 are abutted by the bending portion 1031, and the bending portion 1031 is sandwiched between a groove bottom of the annular groove 1011 and the housing 40 to form a space therebetween for the housing 40 to be inserted in. In the embodiment, the second sealing element 103 is provided with the bending portion 1031, where the bending portion 1031 is convexly positioned along an axial direction of the second sealing element 103, so that the second sealing element 103 is sleeved in the annular groove 1011, and when the housing 40 is inserted in the annular groove 1011 by the sealing element, the bending portion 1031 is sandwiched between the groove bottom of the annular groove 1011 and the housing 40. In other embodiments, the bending portion 1031 may be provided on the first sealing element 102, or the bending portion 1031 may be provided on both the first sealing element 102 and the second sealing element 103 to achieve the above structure. In the embodiment, the first sealing element 102 is positioned outside the housing 40, that is, the injection molded element 104 is lap-jointed with the first sealing element 102. When the top cap assembly 10 is riveted to the housing 40, the injection molded element 104 exerts a force towards an axis of the pole 101 on the first sealing element 102, and the force may be transmitted to the second sealing element 103, the second sealing element 103 abuts against the groove wall of the annular groove 1011.

For example, the top cap assembly 10 further includes a metal pressing ring 105, where the metal pressing ring 105 is sleeved on the pole 101 and positioned in the annular groove 1011, and the metal pressing ring 105 abuts against the sealing element 11 and is positioned at a side of the sealing element 11 away from the plastic element 104. When the pole 101 passes through the mounting hole 401 to abut against a cell 30, the housing 40 presses the sealing element 11 and the metal pressing ring 105 against the groove wall of the annular groove 1011. Since the pole 101 is riveted to the housing 40, a provision of the metal pressing ring 105 may prevent the pole 101 from breaking the sealing element 11 during the process of riveting so that the pole 101 directly contacts with the housing 40 so as to cause short circuit. For example, the metal pressing ring 105 is made of a material of aluminum. A qualified rate of riveting molding can be improved by controlling a compression ratio of the sealing element 11 via the metal pressing ring 105. In the embodiment, the compression ratio of the sealing element 11 ranges from 10% to 30%.

For example, the metal pressing ring 105 and the pole 101 are welded. During the process of riveting, the metal pressing ring 105 presses the sealing element 11, which may achieve a sealing between the metal pressing ring 105 and an inner wall of the housing 40. A sealing between the metal pressing ring 105 and a flange of the pole 101, i.e. the groove wall of the annular groove 1011, is achieved by a mechanical press between the pole 101 and the metal pressing ring 105, i.e., a connection surface is formed first, and then laser welding is used to achieve a complete sealing for the connection surface, so as to ensure a reliable seal between the pole 101 and the inner wall of the housing 40.

For example, the top cap assembly 10 further includes a positive current collector 107 and an inner insulating sheet 106, where the positive current collector 107 is disposed on the cell 30, the inner insulating sheet 106 is positioned at a surface of the positive current collector 107 away from the cell 30, i.e. the inner insulating sheet 106 is sandwiched between the positive current collector 107 and the housing 40 to prevent the positive current collector 107 from abutting against the housing 40, and an end of the pole 101 passes through the inner insulating sheet 106 to abut against the positive current collector 107. For example, the battery further includes an insulating paste 108 attached to an outer peripheral surface of an end of the cell 30 to abut against the positive current collector 107, where the insulating paste 108 is used to prevent a short circuit due to a positive electrode of the cell 30 abutting against the housing 40.

For example, as shown in FIG. 2, in order to satisfy assembly processes, an outer diameter of an end of the pole 101 extending out of the housing 40 is designed to be "ϕ₁" in the range of 14.5mm to 18.5mm. A fitting hole 1012 is defined on the pole 101, where the fitting hole 1012 has a diameter of "ϕ₂" in the range of 3mm to 8mm. The fitting hole 1012 has a hole depth of "H₁" in the range of 2mm to 3.5mm. A distance between a bottom surface of the fitting hole 1012 and a surface of the pole 101 abutting against the cell 30 is "H₂" in the range of 0.6mm to 2mm. In order to manufacture the fitting hole 1012, a draft angle of molding process is designed to be "α" in the range of 2° to 8°. By disposing the fitting hole 1012, a welding connection between the pole 101 and the positive current collector 107 can be easily achieved, and the fitting hole 1012 may be filled in by coating a glue or inserting an aluminum nail after the welding.

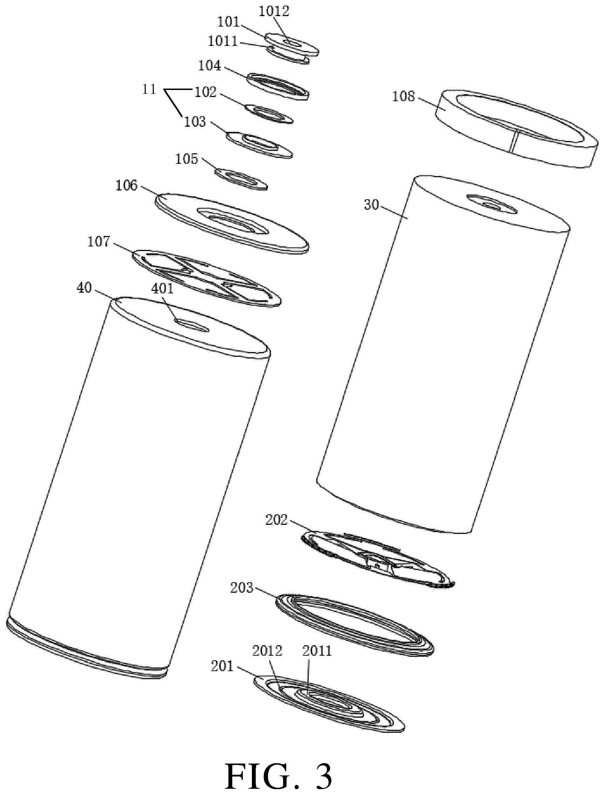

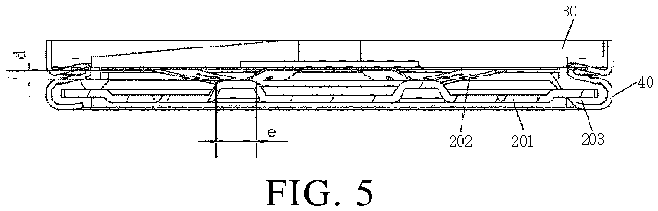

As shown in FIG. 3 to FIG. 5, a battery structure is further provided in the embodiment, including a cell 30, a housing 40, a bottom cap assembly 20, and the top cap assembly 10 mentioned above. The cell 30 is disposed in the housing 40, and the bottom cap assembly 20 and the top cap assembly 10 are disposed at both ends of the housing 40, respectively. The top cap assembly 10 is electrically connected to the cell 30 and insulated from the housing 40, and the bottom cap assembly 20 abuts against the cell 30 and is electrically connected to the housing 40.

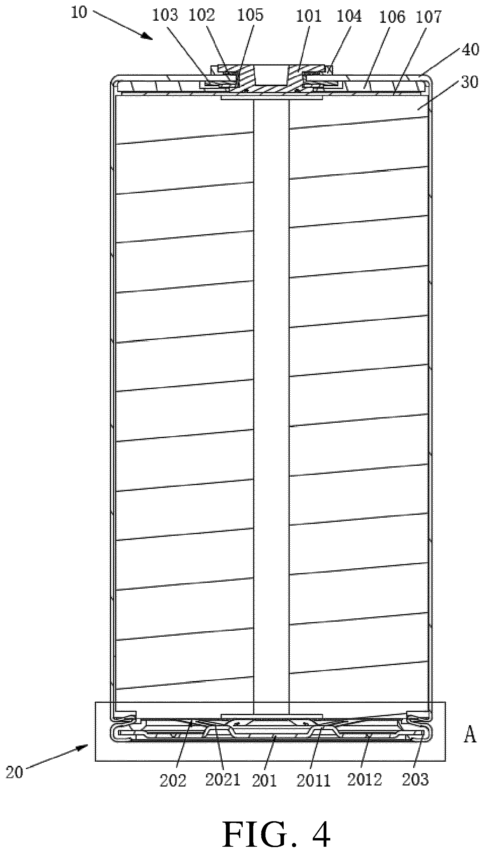

For example, as shown in FIG. 4, the bottom cap assembly 20 includes a bottom cap plate 201 and a negative current collector 202 disposed in a stacked manner, where the bottom cap assembly 20 is connected with an end of the housing 40 by the bottom cap plate 201 and abuts against the cell 30 by the negative current collector 202.

For example, in order to achieve a reliable connection between the bottom cap assembly 20 mentioned above and the cell 30, a surface of the bottom cap plate 201 facing the negative current collector 202 is convexly provided with a first convex portion 2011, a surface of the negative current collector 202 facing the bottom cap plate 201 is convexly provided with a second convex portion 2021. The first convex portion 2011 abuts against the second convex portion 2021, and the second convex portion 2021 is configured to adjust a distance between the negative current collector 202 and the bottom cap plate 201. In the embodiment, the first convex portion 2011 is an annular structure punched on the bottom cap plate 201, and the second convex portion 2021 is an arched structure bent on the negative current collector 202. Based on a thin sheet shape of the negative current collector 202, the negative current collector 202 is provided with the arched structure, so that the negative current collector 202 generates a resilient force towards the cell 30 and the bottom cap plate 201 under pressing of the cell 30. In order to ensure a reliable abutment among the cell 30, the negative current collector 202, and the bottom cap plate 201, a certain error space can be provided for an assembly process in an axial direction of the battery. For example, the negative current collector 202 is welded to the cell 30 and the housing 40.

For example, in order to ensure that the second convex portion 2021 has a better resilient force, in the axial direction of the battery, a minimum distance between a surface of the negative current collector 202 abutting against the cell 30 and the first convex portion 2011 is "d" in the range of 1mm to 2.5mm.

For example, in order to ensure a good contact between the bottom cap plate 201 and the negative current collector 202, along a radial direction of the bottom cap plate 201, a minimum width of the first convex portion 2011 is "e" in the range of 2mm to 6mm.

For example, an explosion-proof nick 2012 is further provided on a surface of the bottom cap plate 201 facing the negative current collector 202. The explosion-proof nick 2012 may be used as a safe explosion-proof valve of the battery. In a case of short circuit, or overcharge, or over-discharge, or etc., inside the battery, a large amount of gas generated inside the battery may break the bottom cap plate 201 at a position of the explosion-proof nick 2012, thereby realizing pressure relief. The explosion-proof nick 2012 is provided at the inner side, which can improve sensitivity of opening of explosion-proof.

For example, the bottom cap assembly 20 further includes a bottom sealing ring 203. The bottom sealing ring 203 is disposed around an outer periphery of the bottom cap plate 201 and sandwiched between the bottom cap plate 201 and the inner wall of the housing 40, thereby ensuring a sealing of bottom of the battery. In the embodiment, firstly, the housing 40 is rolled to define a ring groove at its lower portion, and the bottom cap plate 201 and the bottom sealing ring 203 are disposed under the groove. Then, the housing 40 is folded inward by a pier pressing process, so that the bottom cap plate 201, the bottom sealing ring 203 and the housing 40 are fixed, and the bottom sealing ring 203 is pressed in the pier pressing process. For example, a compression ratio of the bottom sealing ring 203 ranges from 15% to 50%, and a distance between the groove and a bottom of the housing 40 ranges from 2mm to 3.2mm after they are installed completely.

## Claims

1. A top cap assembly, applied to a battery comprising a housing (40) having a mounting hole (401), the top cap assembly (10) passing through the mounting hole (401) of the housing (40), wherein the top cap assembly comprises:
a pole (101), wherein the pole (101) is provided with an annular groove (1011) recessed in a radial direction;
a sealing element (11), wherein the sealing element (11) is sleeved on the pole (101) and positioned in the annular groove (1011), the sealing element (11) is sandwiched between the housing (40) and a groove wall of the annular groove (1011), and the sealing element (11) is partially positioned outside the housing (40); and
a plastic element (104), wherein the plastic element (104) is sleeved on the sealing element (11) and positioned outside the housing (40), and the plastic element (104) is partially sandwiched between the housing (40) and the groove wall of the annular groove (1011).

2. The top cap assembly of claim 1, wherein a hardness of the plastic element (104) is greater than a hardness of the sealing element (11).

3. The top cap assembly of claim 1, wherein the plastic element (104) comprises an inner ring (1041) and an outer ring (1042) connected to each other, and wherein the inner ring (1041) is sandwiched between the groove wall of the annular groove (1011) and the housing (40) and lap-jointed with the sealing element (11), the outer ring (1042) is positioned outside the annular groove (1011) and positioned around an outer side of the pole (101), and a gap is defined between the outer ring (1042) and an outer peripheral surface of the pole (101).

4. The top cap assembly of claim 3, wherein, in the radial direction of the pole (101), the gap has a size of a in the range of 0.1mm to 0.5mm, the outer ring (1042) has a width of b in the range of 0.4mm to 1mm, and a lap length of the inner ring (1041) and the sealing element (11) is c in the range of 0.8mm to 3mm.

5. The top cap assembly of claim 3, wherein the sealing element (11) comprises a first sealing element (102) and a second sealing element (103), and wherein the first sealing element (102) is lap-jointed with the inner ring (1041), at least one of the first sealing element (102) and the second sealing element (103) comprises a bending portion (1031), the first sealing element (102) and the second sealing element (103) are abutted by the bending portion (1031), and the bending portion (1031) is sandwiched between a groove bottom of the annular groove (1011) and the housing (40).

6. The top cap assembly of claim 3, wherein a limiting groove (10111) is defined on the groove wall of the annular groove (1011), a limiting protrusion (10411) is disposed on the inner ring (1041), the inner ring (1041) is sandwiched between the housing (40) and the groove wall of the annular groove (1011), and the limiting protrusion (10411) is positioned in the limiting groove (10111).

7. The top cap assembly of claim 1, further comprising a metal pressing ring (105), wherein the metal pressing ring (105) is sleeved on the pole (101) and positioned in the annular groove (1011), the metal pressing ring (105) abuts against the sealing element (11) and is positioned at a side of the sealing element (11) away from the plastic element (104), and the housing (40) presses the sealing element (11) and the metal pressing ring (105) against the groove wall of the annular groove (1011).

8. The top cap assembly of claim 7, wherein the metal pressing ring (105) and the pole (101) are welded.

9. The top cap assembly of any one of claims 1-8, further comprising a positive current collector (107) and an inner insulating sheet (106), wherein the positive current collector (107) is disposed on a cell (30) of the battery, the pole (101) passes through the mounting hole (401) and presses the positive current collector (107), and the inner insulating sheet (106) is sandwiched between the positive current collector (107) and an inner wall of the housing (40).

10. A battery structure, comprising a cell (30), a housing (40), a bottom cap assembly (20), and the top cap assembly (10) of any one of claims 1-9, wherein the cell (30) is positioned in the housing (40), and the top cap assembly (10) and the bottom cap assembly (20) are disposed at both ends of the housing (40), respectively.

11. The battery structure of claim 10, wherein the bottom cap assembly (20) comprises a bottom cap plate (201) and a negative current collector (202) disposed in a stacked manner, the bottom cap assembly (20) abuts against the cell (30) by the negative current collector (202), and the bottom cap assembly (20) is connected with the housing (40) by the bottom cap plate (201).

12. The battery structure of claim 11, wherein a surface of the bottom cap plate (201) facing the negative current collector (202) is convexly provided with a first convex portion (2011), a surface of the negative current collector (202) facing the bottom cap plate (201) is convexly provided with a second convex portion (2021), the first convex portion (2011) abuts against the second convex portion (2021), and the second convex portion (2021) is configured to adjust a distance between the negative current collector (202) and the bottom cap plate (201).
